(19) Europäisches Patentamt
European Patent Office
Office européen des brevets

(11) **EP 3 937 359 A1**

(12) **EUROPEAN PATENT APPLICATION**
published in accordance with Art. 153(4) EPC

(43) Date of publication:
**12.01.2022 Bulletin 2022/02**

(51) Int Cl.:
**H02K 41/02** (2006.01)    **B65G 54/02** (2006.01)
**G01N 35/04** (2006.01)    **H02K 41/03** (2006.01)

(21) Application number: **20769385.4**

(22) Date of filing: **14.01.2020**

(86) International application number:
**PCT/JP2020/000905**

(87) International publication number:
**WO 2020/183889 (17.09.2020 Gazette 2020/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.03.2019 JP 2019042224**

(71) Applicant: **Hitachi High-Tech Corporation
Minato-ku
Tokyo 105-6409 (JP)**

(72) Inventors:
• **AOYAMA Yasuaki
  Tokyo 100-8280 (JP)**
• **HOSHI Ryosuke
  Tokyo 100-8280 (JP)**
• **KOBAYASHI Hiroyuki
  Tokyo 100-8280 (JP)**
• **TAMAKOSHI Takeshi
  Tokyo 100-8280 (JP)**
• **KANEKO Satoru
  Tokyo 100-8280 (JP)**
• **WATANABE Hiroshi
  Tokyo 105-6409 (JP)**
• **KAMBARA Katsuhiro
  Tokyo 105-6409 (JP)**
• **ONIZAWA Kuniaki
  Tokyo 105-6409 (JP)**

(74) Representative: **MERH-IP Matias Erny Reichl
Hoffmann
Patentanwälte PartG mbB
Paul-Heyse-Strasse 29
80336 München (DE)**

(54) **CONVEYING DEVICE, AND SAMPLE ANALYSIS SYSTEM AND SAMPLE PREPROCESSING DEVICE COMPRISING SAME**

(57)    The invention provides a conveyance device having a smaller loss of a winding than that of a related art while increasing thrust for conveying a body to be conveyed, and a specimen analysis system and a specimen pretreatment device including the same.

A conveyance device 1 includes: a permanent magnet 10 provided on the side of a specimen rack 111; teeth 22 formed of a second magnetic body; and a winding 21 wound around the side of an outer periphery of the teeth 22, wherein a cross-sectional area of a cross section of a part of the teeth facing the permanent magnet 10 is larger than that of other parts thereof. Alternatively, the conveyance device 1 includes: the permanent magnet 10 provided on the side of the specimen rack 111; the teeth 22 formed of the second magnetic body; and the winding 21 wound around the side of the outer periphery of the teeth 22, wherein a gap Lc between the permanent magnet 10 and the winding 21 and a gap Lt between permanent magnet 10 and the teeth 22 satisfy a relationship of Lc>Lt.

[FIG. 2]

**Description**

Technical Field

The present invention relates to a conveyance device, and a specimen analysis system and a specimen pretreatment device including the same.

Background Art

As an example of a laboratory specimen conveyance system and a corresponding operation method that are significantly flexible and provide high conveyance performance, JP-A-2017-77971 (PTL 1) discloses that the example thereof includes: a plurality of container carriers respectively including at least one magnetically active device, desirably at least one permanent magnet and adapted to convey a specimen container; a conveyance surface adapted to convey the container carrier; and a plurality of electromagnetic actuators that are stationary and disposed below the conveyance surface and that are adapted to move the container carrier on the conveyance surface by applying a magnetic force to the container carrier.

As an example of a laboratory specimen distribution system including an operation parameter optimized in relation to a specimen distribution system of related art, JP-A-2017-102103 (PTL 2) discloses that the laboratory specimen distribution system includes a plurality of electromagnetic actuators, each electromagnetic actuator includes a ferromagnetic core and an excitation winding, and each excitation winding exceeds its allocated ferromagnetic core.

Citation List

Patent Literature

PTL 1: JP-A-2017-77971
PTL 2: JP-A-2017-102103

Summary of Invention

Technical Problem

A specimen analysis system for a clinical test performs a test of an instructed analysis item with respect to specimens (samples) such as blood, plasma, serum, urine, other body fluids, or the like.

In the specimen analysis system, devices having a plurality of functions can be connected to each other and each process can be automatically processed. That is, in order to streamline laboratory work, an analysis unit of a plurality of analytical fields such as biochemistry, immunity, or the like and a pretreatment unit that performs pretreatment necessary for analysis are connected to a conveyance line, thereby being operated as one system.

The conveyance line used in the specimen analysis system of related art is mainly a belt drive system. In the belt drive system, there is a problem that when conveyance is stopped due to some abnormality during the conveyance, the specimen cannot be supplied to a device on a downstream side. Therefore, it is required to pay close attention to wear of a belt.

With advancement of medical care and progress of aging society, importance of specimen treatment increases. Therefore, in order to improve analysis processing capability of the specimen analysis system, it is desired to achieve high-speed conveyance of the specimen, mass simultaneous conveyance thereof, and conveyance thereof in a plurality of directions.

As an example of a technology for implementing the above-described conveyance, there are technologies described in JP-A-2017-77971 and JP-A-2017-102103 (PTLs 1 and 2). In the technologies described in JP-A-2017-77971 and JP-A-2017-102103 (PTLs 1 and 2), a container carrier detection device for detecting a location of a magnetically active device provided on a specimen conveyance carrier is provided.

However, JP-A-2017-77971 and JP-A-2017-102103 (PTLs 1 and 2) have a problem that thrust for moving the container carrier is small. On the other hand, in order to increase the thrust, it is required to increase the number of turns of an excitation winding and increase an excitation current, and in such a method, there is a problem that loss of the excitation winding increases when the thrust increases such that heat generation of the system increases.

In order to increase the thrust, it is required to increase an area of a ferromagnetic core on a side opposite to a permanent magnet. Meanwhile, there is a problem that since each excitation winding exceeds its allocated ferromagnetic core, a space of the excitation winding decreases as the area of the ferromagnetic core increases, such that the loss of the excitation winding increases.

The present invention provides a conveyance device, and a specimen analysis system and a specimen pretreatment device including the same, in which winding loss can be reduced while thrust for conveying a body to be conveyed is greater than that of related art.

Solution to Problem

The present invention includes a plurality of units for solving the above-described problems, and an example thereof includes: a first magnetic body provided on a side of a body to be conveyed; teeth formed of a second magnetic body; and a winding wound around a side of an outer periphery of the teeth, in which a cross-sectional area of a cross section of a part of the teeth facing the first magnetic body is larger than that of other parts thereof.

Another example thereof includes: a first magnetic body provided on a side of a body to be conveyed; teeth formed of a second magnetic body; and a winding wound around an outer periphery of the teeth, in which a gap Lc between the first magnetic body and the winding and a gap Lt between the first magnetic body and the teeth satisfy a relationship of Lc>Lt.

According to the present invention, it is possible to implement a conveyance device in which winding loss is reduced while thrust for conveying a body to be conveyed increases. An issue, a configuration, and an effect other than those described above will be clarified by descriptions of the following embodiments.

Brief Description of Drawings

[Fig. 1] Fig. 1 is a view illustrating a schematic configuration of a conveyance device according to a first embodiment of the present invention.

[Fig. 2] Fig. 2 is a view schematically illustrating a cross section of the conveyance device illustrated in Fig. 1.

[Fig. 3] Fig. 3 is a view illustrating a relationship between a teeth diameter, thrust, and a winding space.

[Fig. 4] Fig. 4 is a view illustrating an example of a shape of a magnet facing surface in the conveyance device according to the first embodiment.

[Fig. 5] Fig. 5 is a view illustrating another example of the shape of the magnet facing surface in the conveyance device according to the first embodiment.

[Fig. 6] Fig. 6 is a view illustrating another example of the shape of the magnet facing surface in the conveyance device according to the first embodiment.

[Fig. 7] Fig. 7 is a view illustrating another example of the shape of the magnet facing surface in the conveyance device according to the first embodiment.

[Fig. 8] Fig. 8 is a view illustrating another example of the shape of the magnet facing surface in the conveyance device according to the first embodiment.

[Fig. 9] Fig. 9 is a view illustrating a thrust characteristic when a direct current flows through a winding in the conveyance device illustrated in Fig. 2.

[Fig. 10] Fig. 10 is a view illustrating another example of the shape of the magnet facing surface in the conveyance device according to the first embodiment.

[Fig. 11] Fig. 11 is a view illustrating a schematic configuration of a conveyance device according to a second embodiment of the present invention.

[Fig. 12] Fig. 12 is a view illustrating a schematic configuration of a conveyance device according to a third embodiment of the present invention.

[Fig. 13] Fig. 13 is a view illustrating a schematic configuration of a conveyance device according to a fourth embodiment of the present invention.

[Fig. 14] Fig. 14 is a view illustrating a schematic configuration of a conveyance device according to a fifth embodiment of the present invention.

[Fig. 15] Fig. 15 is a top view of the conveyance device illustrated in Fig. 14.

[Fig. 16] Fig. 16 is a view illustrating another example of the schematic configuration of the conveyance device according to the fifth embodiment.

[Fig. 17] Fig. 17 is a top view of the conveyance device illustrated in Fig. 16.

[Fig. 18] Fig. 18 is a top view of a coil of the conveyance device according to the fifth embodiment.

[Fig. 19] Fig. 19 is a top view of another example of the coil of the conveyance device according to the fifth embodiment.

[Fig. 20] Fig. 20 is a top view of another example of the coil of the conveyance device according to the fifth embodiment.

[Fig. 21] Fig. 21 is a top view of another example of the coil of the conveyance device according to the fifth embodiment.

[Fig. 22] Fig. 22 is a view illustrating an example of a specimen analysis system according to a sixth embodiment of the present invention.
[Fig. 23] Fig. 23 is a view illustrating an example of a specimen pretreatment device according to the sixth embodiment of the present invention.

Description of Embodiments

Hereinafter, embodiments of a conveyance device, and a specimen analysis system and a specimen pretreatment device including the same according to the present invention will be described with reference to the drawings.

<First embodiment>

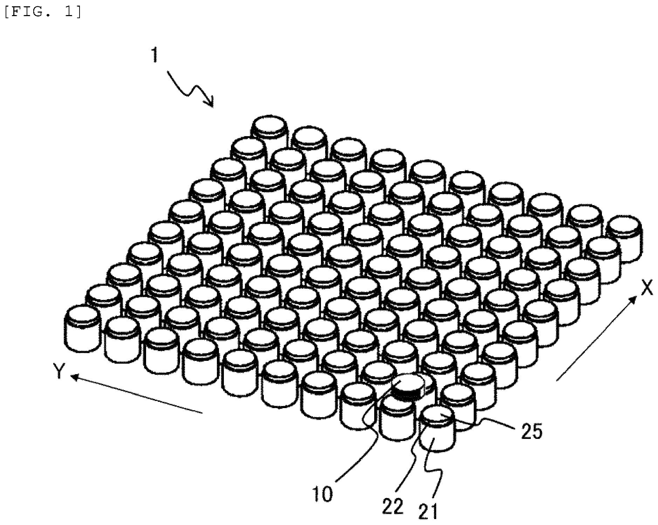

A first embodiment of the conveyance device of the present invention will be described with reference to Figs. 1 to 10.

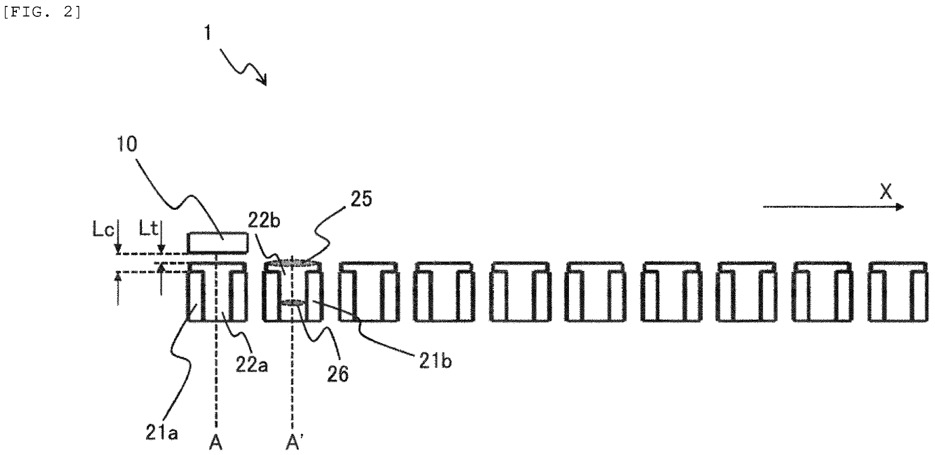

First, a schematic configuration of the conveyance device of the embodiment will be described with reference to Figs. 1 and 2. Fig. 1 is a view illustrating an appearance of the conveyance device. Fig. 2 is a view schematically illustrating a cross section of a conveyance device 1 illustrated in Fig. 1.

The conveyance device 1 of the embodiment is a device that conveys a body to be conveyed (not illustrated for convenience of illustration in Fig. 1) including a permanent magnet 10. As illustrated in Figs. 1 and 2, the conveyance device 1 includes an electromagnet portion in which a plurality of teeth 22 formed of a plurality of magnetic bodies that generate thrust for conveying the body to be conveyed, and a plurality of windings 21 provided around the teeth 22 are aligned. Among these electromagnet portions, by exciting the electromagnet portion located in a conveyance path according to the conveyance path and the electromagnet portion in the vicinity of a location where the permanent magnet 10 exists, the conveyance of the body to be conveyed is performed while grasping the location of the permanent magnet 10, that is, the body to be conveyed.

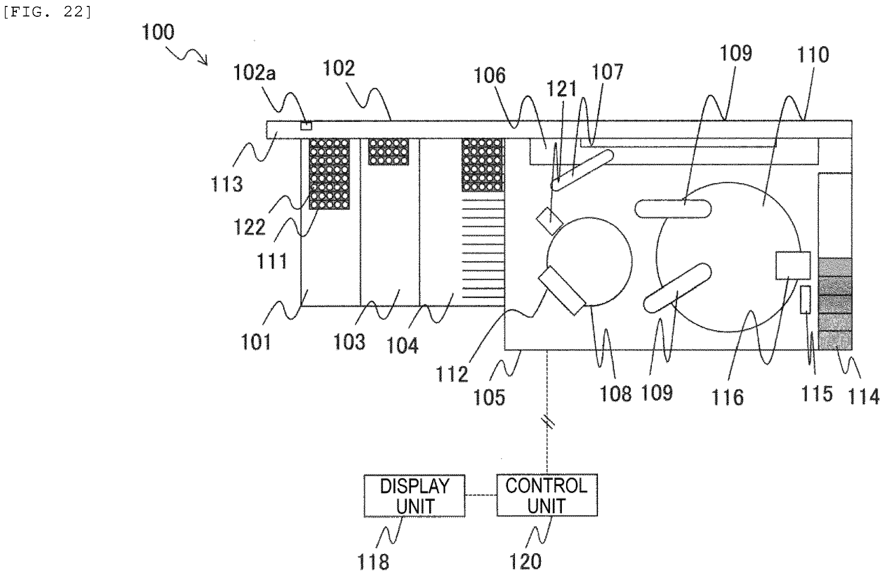

Here, the embodiment will describe a case of a specimen rack 111 (refer to Fig. 22) that stores a specimen container for storing a specimen such as blood, urine, or the like as the body to be conveyed. In this case, the permanent magnet 10 is provided on a bottom surface or the like of the specimen rack.

In the conveyance device 1, the electromagnet portion is usually fixed, and the body to be conveyed provided with the magnetic body or the permanent magnet 10 moves on an upper surface of a conveyance surface (not illustrated) provided on an upper surface of the electromagnet portion.

The permanent magnet 10 is desirably a permanent magnet such as neodymium, ferrite, or the like, and can also be formed of other magnets and a soft magnetic body. The permanent magnet and the soft magnetic body may be combined.

The teeth 22 is formed of the magnetic body. In the embodiment, a surface of the teeth 22 on a side facing the permanent magnet 10 is defined as a magnet facing surface 25 of the teeth 22, and a portion of the teeth 22 covered by the winding 21 is defined as a cross section 26 of the winding 21.

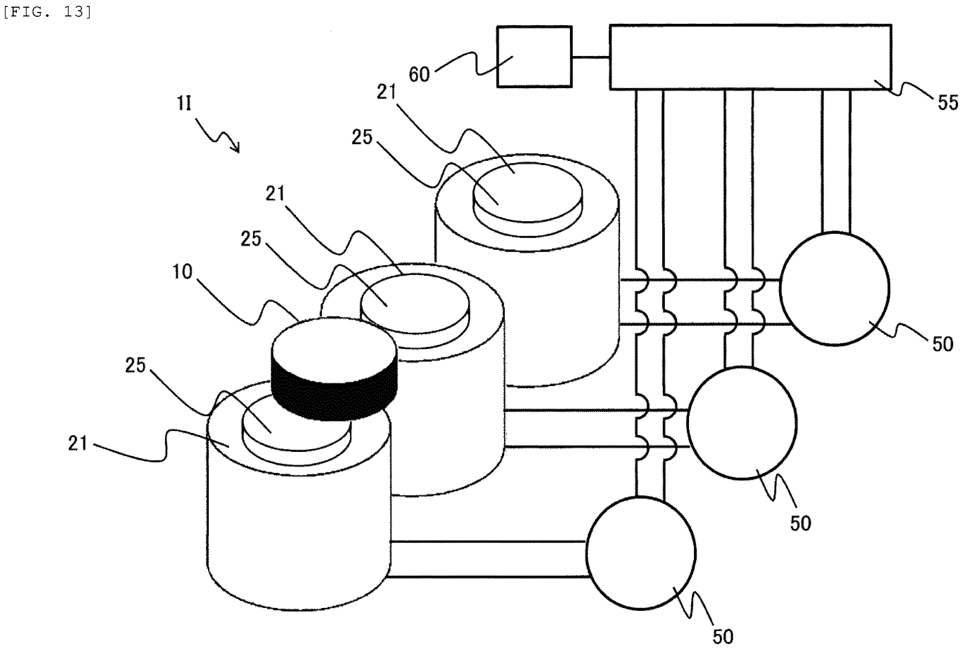

A drive circuit 50 (refer to Fig. 13) is connected to the winding 21 wound around a side of an outer periphery of the plurality of teeth 22, and a current is supplied from the drive circuit 50. Magnetic flux generated by the supplied current acts on the permanent magnet 10 via the teeth 22, thereby moving the body to be conveyed in an X direction, a Y direction, or an XY direction in Fig. 1.

Fig. 2 illustrates a case in which the permanent magnet 10 is caused to advance in the X direction.

In order to move the permanent magnet 10 from a location A to a location A' in Fig. 2, a current is supplied from the drive circuit 50 to a winding 21b in a direction that generates the magnetic flux in the same direction as a magnetization direction of the permanent magnet 10, thereby generating thrust in the X direction of Fig. 2. The thrust in the X direction can convey the permanent magnet 10 and the body to be conveyed. The thrust can be continuously generated in the permanent magnet 10 by allowing the current to sequentially flow through the winding along the X direction.

Here, in order to generate large thrust in the permanent magnet 10, it is conceivable to increase the magnet facing surface 25 of the teeth, which is the surface on the side facing the permanent magnet 10.

However, in a structure of the electromagnet portion in the related art such as JP-A-2017-77971 (PTL 1) or the like, a cross section of a winding portion of teeth and a cross section of a magnet facing surface of the teeth which is a surface on a side facing a permanent magnet have the same area. Accordingly, when the cross section of the magnet facing surface of the teeth which is the surface on the side facing the permanent magnet is widened, the cross section of the winding portion of the teeth also becomes large.

On the other hand, in the embodiment, as a structure that secures a space of the winding 21 and improves the thrust, as illustrated in Fig. 2, the teeth 22 have a structure in which a cross-sectional area of a cross section of a part facing the permanent magnet 10 is larger than a cross-sectional area of other parts. Particularly, a cross-sectional area of a part of the teeth 22 facing the permanent magnet 10 is larger than a cross-sectional area of a part of the teeth 22 around which the winding 21 is wound.

That is, the magnet facing surface 25, which is the surface on the side facing the permanent magnet 10, has a size equal to or larger than the cross section 26 of the winding portion of the teeth 22, which is an inside of the winding 21, and an inner diameter of the winding 21.

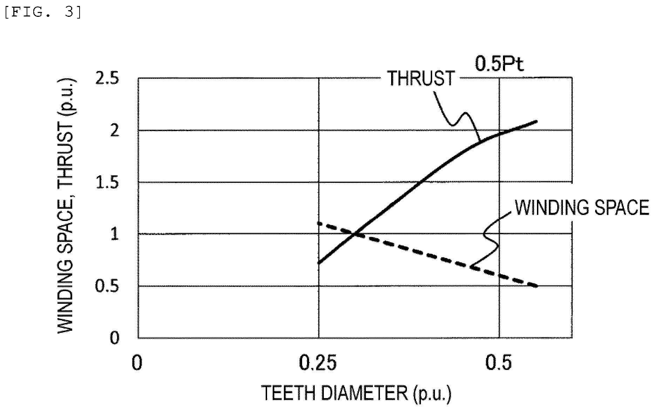

Here, Fig. 3 illustrates a relationship between a teeth diameter, thrust, and a winding space when a pitch of the teeth from the location A to the location A' in Fig. 2 is set to Pt. As illustrated in Fig. 3, the teeth diameter and the thrust with respect to the pitch of the teeth has a relationship that the thrust gradually increases as the diameter of the teeth increases.

On the other hand, as the diameter of the teeth increases, the winding space decreases. Therefore, when the diameter of the teeth increases to increase the thrust, resistance of the winding increases due to the decrease in the winding space, or a large current is required to flow. Therefore, there is a problem that loss of the winding increases and temperature of the conveyance device rises.

As the diameter of the teeth increases, an increase in thrust becomes slower when the pitch of the teeth exceeds half of Pt (0.5 Pt).

Therefore, when the pitch of the teeth 22 is set to Pt, it is desirable that the diameter of the teeth 22 is set so that a width of the largest part of the teeth 22 is equal to or less than half of Pt (0.5 Pt).

In a cross-sectional shape of the teeth 22, the cross section 26 of the winding portion and the magnet facing surface 25 are not limited to a circular shape. As long as the same effect can be obtained, various polygons such as an ellipse, a rectangle, a star, or the like can be formed.

Among the teeth 22, a cross-sectional shape of the magnet facing surface 25 in a vertical direction is not also particularly limited.

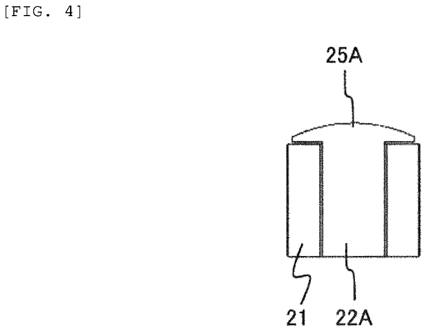

For example, the cross-sectional shape of the magnet facing surface 25 is not limited to a flat shape as illustrated in Fig. 2. As illustrated in Fig. 4, teeth 22A including a dome-shaped magnet facing surface 25A that becomes continuously thinner as approaching a side of the permanent magnet 10 can be formed.

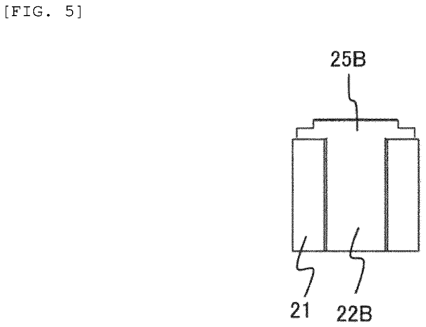

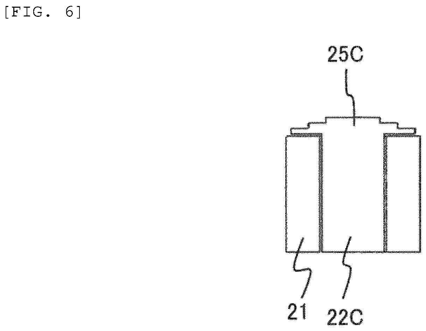

As illustrated in Figs. 5 and 6, teeth 22B and 22C including magnet facing surfaces 25B and 25C that become thinner stepwise as approaching the side of the permanent magnet 10 can be formed.

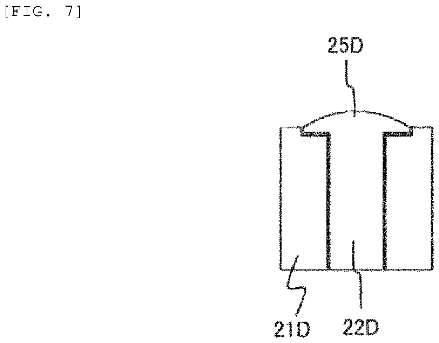

As illustrated in teeth 22D of Fig. 7, a tip of a magnet facing surface 25D of a portion of a winding 21D can protrude more than an end surface of the winding 21D on the side of the permanent magnet 10. In this manner, it is important that the teeth 22 have at least a part smaller than an inner minimum cross section of the winding 21, and a cross section of a part larger than the inner minimum cross section of the winding 21 (the magnet facing surface 25D).

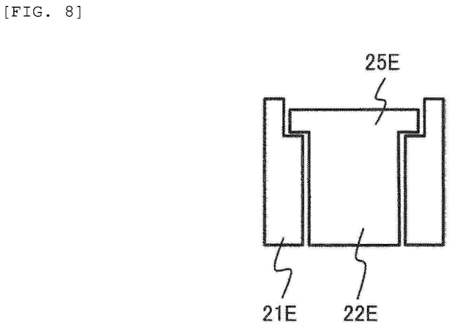

As illustrated in Fig. 8, teeth 22E can be disposed so as to be embedded in winding 21E. This case also forms a structure in which a cross-sectional area of a magnet facing surface 25E of the teeth 22E facing the permanent magnet 10 is larger than that of other parts thereof.

In various teeth as described above, it is also possible to form a recessed portion on a central portion of the teeth and to embed a magnetic flux sensor or the like therein.

The shapes formed as described above have a structure in which the thrust is improved by enlarging the magnet facing surface 25 facing the permanent magnet 10 and expanding the magnetic flux on the side of the permanent magnet 10, and the loss of the winding 21 is reduced.

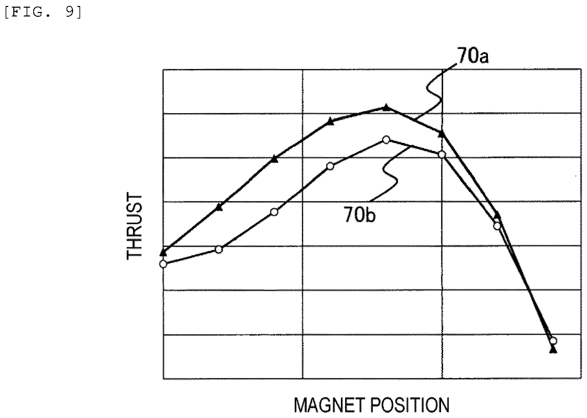

Fig. 9 illustrates a characteristic of the thrust when the permanent magnet 10 moves from the position A to the position A', when a direct current flows through the winding 21b in Fig. 2. In Fig. 9, a reference sign 70b indicates a thrust when the cross section of the winding portion of the teeth and the cross section of the magnet facing surface 25 of the teeth of the surface on the side facing the permanent magnet are the same, and a reference sign 70a indicates a thrust when the magnet facing surface 25 of the teeth 22a and 22b on the side facing the permanent magnet 10 is set to be larger than the inner diameters of the winding 21a and the winding 21b.

As illustrated in Fig. 9, the magnet facing surface 25 facing the permanent magnet 10 is set to be larger than the inner diameters of the winding 21a and the winding 21b, thereby making it possible to increase the thrust. As a result, it is possible to form a conveyance device that increases the thrust and reduces the winding loss.

As illustrated in Fig. 2, a gap Lc between the winding 21a and the winding 21b and the permanent magnet 10 and a gap Lt between the magnet facing surface 25 of the teeth 22 and the permanent magnet 10 satisfy a relationship of Lc>Lt. As a result, the magnet facing surface 25 facing the permanent magnet 10 protrudes toward the side of the permanent magnet 10, and the gap between the permanent magnet 10 and the magnet facing surface 25 of the teeth 22 can become narrow such that the thrust can be increased.

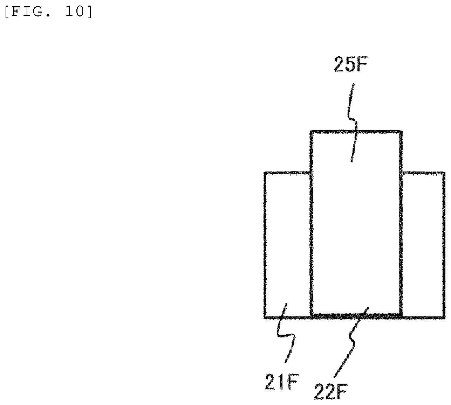

As illustrated in Fig. 10, a cross-sectional area of a magnet facing surface 25F remains the same as that of a winding 21F of a teeth 22F, and the relationship of Lc>Lt can be satisfied.

Next, an effect of the embodiment will be described.

The conveyance device 1 of the first embodiment of the present invention described above includes the permanent magnet 10 provided on a side of the specimen rack 111, the teeth 22 formed of a second magnetic body, and the winding 21 wound around the side of the outer periphery of the teeth 22. The cross-sectional area of the cross section of the part of the teeth 22 facing the permanent magnet 10 is larger than that of other parts thereof.

According to the present invention, it is possible to implement a conveyance device capable of reducing the winding loss while increasing the thrust for conveying the body to be conveyed, and having a higher conveyance capability than that of the related art.

Particularly, the portion of the magnet facing surface 25 facing the permanent magnet 10 is larger than the inner cross-sectional area of the winding 21, such that the magnetic flux acting on the permanent magnet 10 is expanded at the portion of the permanent magnet 10 to improve the thrust as compared with that of the related art, and pulsation can be reduced as compared with that of the related art.

The teeth 22 further protrude than the winding 21, such that when the conveyance surface is damaged or when the conveyance surface is removed during maintenance, the exposed area of the winding 21 is reduced, thereby making it possible to reduce a damage to the winding 21 as compared with that of the related art.

Alternatively, the conveyance device 1 includes the permanent magnet 10 provided on a side of the specimen rack 111, the teeth 22 formed of the second magnetic body, and the winding 21 wound around the outer periphery of the teeth 22. The gap Lc between the permanent magnet 10 and the winding 21 and the gap Lt between the permanent magnet 10 and the teeth 22 satisfy the relationship of Lc>Lt.

In this case as well, in the same manner, it is possible to implement the conveyance device capable of reducing the winding loss while increasing the thrust for conveying the body to be conveyed, and having the higher conveyance capability than that of the related art. The exposed area of the winding 21 is reduced when the conveyance surface is damaged or the conveyance surface is removed during maintenance, thereby obtaining an effect that the damage to the winding 21 can be reduced as compared with that of the related art.

Since the cross-sectional area of the part of the teeth 22 facing the permanent magnet 10 is larger than the cross-sectional area of the part around which the winding 21 is wound, such that various effects of the present invention described above can be obtained more effectively and reliably.

The width of the largest part of the teeth 22 is equal to or less than 0.5 Pt with respect to the pitch Pt of the teeth 22, thereby making it possible not only to improve the thrust but also to secure the space for the winding.

The surface of the teeth 22 facing the specimen rack 111 becomes thinner continuously or stepwise as approaching the side of the specimen rack 111, such that a change in thrust can be smoothed. Therefore, vibration and noise when the body to be conveyed is conveyed can be reduced.

<Second embodiment>

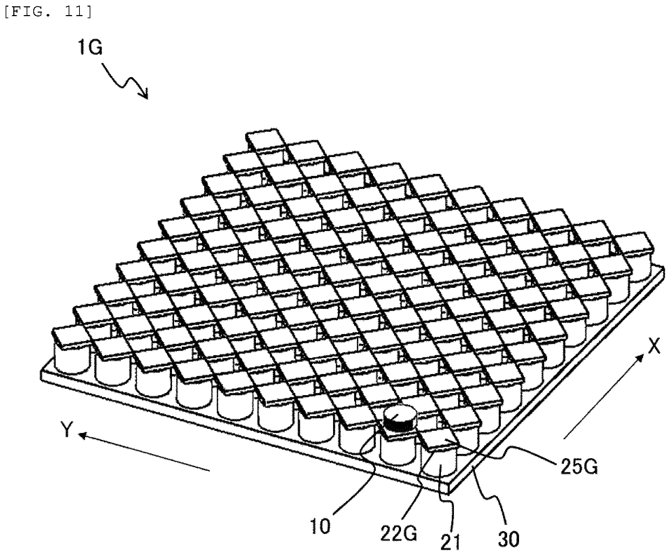

A conveyance device according to a second embodiment of the present invention will be described with reference to Fig. 11. Fig. 11 is a view illustrating a schematic configuration of the conveyance device of the second embodiment. The same configuration as that of the first embodiment will be denoted by the same reference sign, and the description thereof will be omitted. The same also applies to the following embodiments.

In a conveyance device 1G of the embodiment illustrated in Fig. 11, an electromagnet portion formed of a plurality of teeth 22G is connected by a yoke 30 formed of a magnetic body in a direction opposite to a direction facing the body to be conveyed.

A magnet facing surface 25G of the teeth 22G of the surface on the side facing the permanent magnet 10 is formed in a quadrangular shape. Particularly, apex directions of quadrangular shapes, which are corner parts of the magnet facing surface 25G of the teeth 22G, are respectively directed in a conveyance direction of the specimen rack 111 (the X direction in Fig. 11) and in a direction perpendicular to the conveyance direction thereof (the Y direction in Fig. 11).

Since other configurations and operations are substantially the same as those of the conveyance device of the first embodiment described above, details thereof will be omitted.

The conveyance device of the second embodiment of the present invention also obtains almost the same effect as that of the conveyance device of the first embodiment described above.

The corner parts of the surface of the teeth 22G facing the specimen rack 111 are directed to the conveyance direction of the specimen rack 111 and the direction perpendicular to the conveyance direction thereof, thereby making it possible to particularly increase the thrust in the X and Y directions. Therefore, the thrust when the body to be conveyed moves in the X and Y directions can increase, such that stability when the body to be conveyed moves in the X and Y directions increases. When the body to be conveyed moves mainly in the X direction or the Y direction, a current at the time of the movement thereof can be reduced, thereby obtaining an effect of being able to prevent heat generation of the conveyance device.

<Third embodiment>

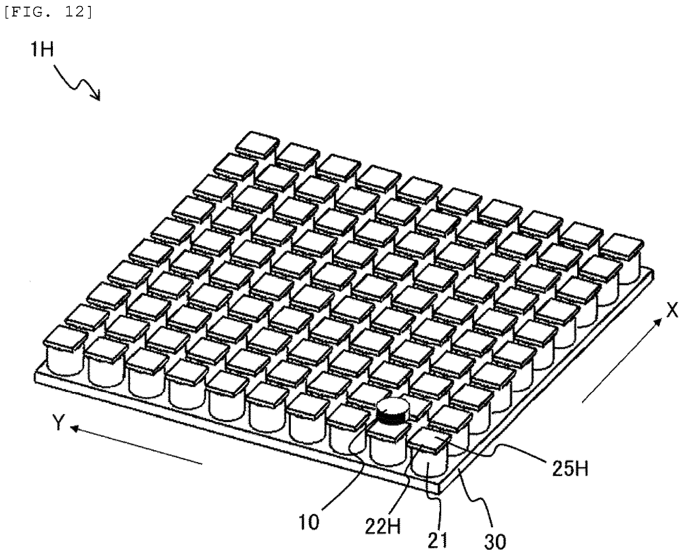

A conveyance device according to a third embodiment of the present invention will be described with reference to Fig. 12. Fig. 12 is a view illustrating a schematic configuration of the conveyance device of the third embodiment.

As illustrated in Fig. 12, in a conveyance device 1H of the embodiment, an electromagnet portion formed of a plurality of teeth 22H is connected by the yoke 30 formed of a magnetic body in a direction opposite to a direction facing the body to be conveyed.

A magnet facing surface 25H of the teeth 22H of a surface on a side facing the permanent magnet 10 is formed in a quadrangular shape, and apex directions of the quadrangular shape are respectively directed to be inclined by 45 degrees in the conveyance direction of the specimen rack 111.

Since other configurations and operations are substantially the same as those of the conveyance device of the first embodiment described above, details thereof will be omitted.

The conveyance device of the third embodiment of the present invention also obtains almost the same effect as that of the conveyance device of the first embodiment described above.

As illustrated in Fig. 1, when the magnet facing surface 25 of the teeth of the surface on the side facing the permanent magnet 10 is formed in the circular shape, and when the corner parts are directed in the conveyance direction as illustrated in Fig. 11, a gap between the teeth 22 and 22G in a direction oblique to the conveyance direction is wider than a gap therebetween in the X and Y directions. Therefore, a thrust characteristic in the X and Y directions and a thrust characteristic in the direction oblique thereto are different from each other. The above-described shape and arrangement are particularly suitable configuration when the conveyance direction is fixed.

On the other hand, as described in the embodiment, the corner parts of the surface of the teeth 22H facing the specimen rack 111 are directed to be inclined by 45 degrees in the conveyance direction of the specimen rack 111, such that a difference in a gap between the magnet facing surfaces 25H of the teeth 22H in the X, Y, and oblique directions can be reduced, such that the thrust in the oblique direction increases. Therefore, the stability when the body to be conveyed moves in the X, Y, and oblique directions can be improved, and a degree of freedom of conveyance can be improved.

<Fourth embodiment>

A conveyance device, and a specimen analysis system and a specimen pretreatment device including the same according to a fourth embodiment of the present invention will be described with reference to Fig. 13. Fig. 13 schematically illustrates a drive system of the conveyance device of the embodiment.

As illustrated in Fig. 13, in a conveyance device 1I of the embodiment, the winding 21 wound around the teeth 22 is connected to each drive circuit 50, and a current of each winding is controlled according to a location of the permanent magnet 10.

The location of the permanent magnet 10 is detected by a location detection unit 60, and a current command calculation unit 55 determines the current flowing through each winding 21 based upon location information thereof.

The current command calculation unit 55 can be implemented by allowing a computer and a field-programmable gate array (FPGA) including a CPU, a memory, an interface, or the like to read a program and to execute a calculation. The program is stored in an internal recording medium and an external recording medium (not illustrated) in each configuration, and is read and executed by the CPU.

Operation control processing may be combined in one program, may be divided into a plurality of programs, or may be a combination thereof. A part or all of the programs may be implemented by dedicated hardware or may be modularized. Various programs may be installed in each device from a program distribution server, the internal recording medium, and the external recording medium.

Each device is not required to be independent, and two or more devices may be integrated and shared to perform only the processing. At least a part of the configuration can be connected via a wired or wireless network.

The location detection unit 60 may be capable of detecting the location of the permanent magnet 10, and a configuration thereof is not particularly limited. For example, the location detection unit 60 may be able to directly measure the location of the permanent magnet 10 by including a hall sensor that detects the magnetic flux of the permanent magnet 10, a length measuring device, or the like.

The location of the permanent magnet 10 can be obtained by detecting the current flowing through the winding 21 and a flow type thereof. This principle is described as follows.

The teeth 22 is formed of the magnetic body, and magnetic flux flowing through the teeth 22 has a property that the magnetic flux becomes difficult to flow therethrough as the magnetic flux increases. Here, when a voltage is applied to the winding 21 to allow the current to flow therethrough, magnetic flux generated by the current is generated in the teeth 22. Therefore, the magnetic flux generated by the permanent magnet 10 and the magnetic flux generated by the current flowing through the winding 21 are generated in the teeth 22.

Generally, when the current flows through the winding 21, a magnetic field is generated around the winding 21, and the generated magnetic flux is proportional to a value of the current flowing therethrough. This proportionality constant is referred to as inductance. However, in the circuit including the magnetic body such as the teeth 22 or the like, the inductance changes depending on a saturation characteristic of the teeth 22.

When the saturation of the teeth 22 occurs, the inductance changes depending on a magnitude of the magnetic flux generated in the teeth 22. That is, the inductance of the winding 21 changes depending on the magnitude of the magnetic flux of the permanent magnet 10. This indicates that the inductance of the winding 21 changes depending on the location of the permanent magnet 10.

A voltage V generated in the winding 21 is represented by a relationship described below.

$$V = -d\varphi \: / \: dt \quad (1)$$

Here, $\varphi$ is the magnetic flux and t is time. The voltage V is represented by an amount of change in magnetic flux per unit time.

When current I and inductance L are set, a relationship therebetween is established below.

$$dI \: / \: dt = (1 \: / \: L) \: \times \: (d\varphi \: / \: dt) \quad (2)$$

From Equations (1) and (2), a relationship is established below.

$$dI \: / \: dt = -V \: / \: L \quad (3)$$

That is, when a constant voltage is applied to the winding 21, a time derivative of the supplied current I changes depending on a magnitude of the inductance L as shown in Equation (3). This indicates that the way the current to be supplied when the voltage is applied rises differently.

Therefore, when the voltage is applied to the winding 21, the inductance L can be calculated by detecting the current flowing through the winding 21 and the flow type thereof. That is, when the inductance L of the winding 21 that changes depending on the location of the permanent magnet 10 is detected, the location of the permanent magnet 10 that affects the inductance L thereof can be obtained. The above-described principle can be used.

Since other configurations and operations are substantially the same as those of the conveyance device of the first embodiment described above, details thereof will be omitted.

The conveyance device of the fourth embodiment of the present invention also obtains almost the same effect as that of the conveyance device of the first embodiment described above.

<Fifth embodiment>

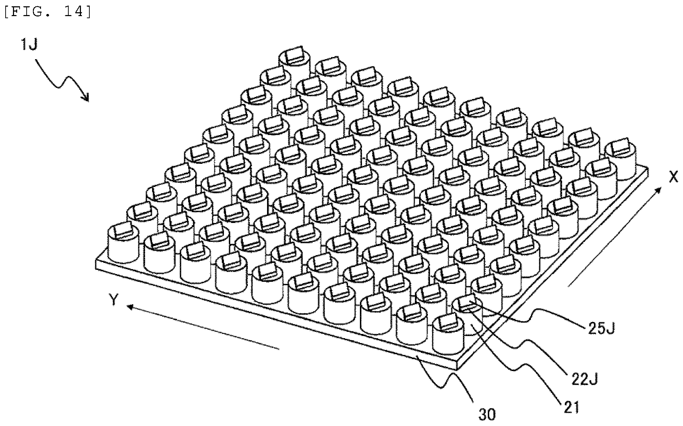

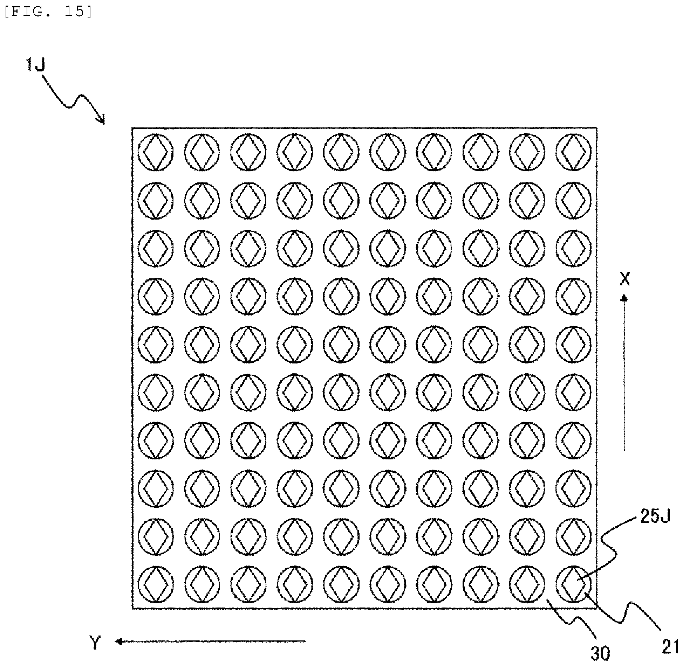

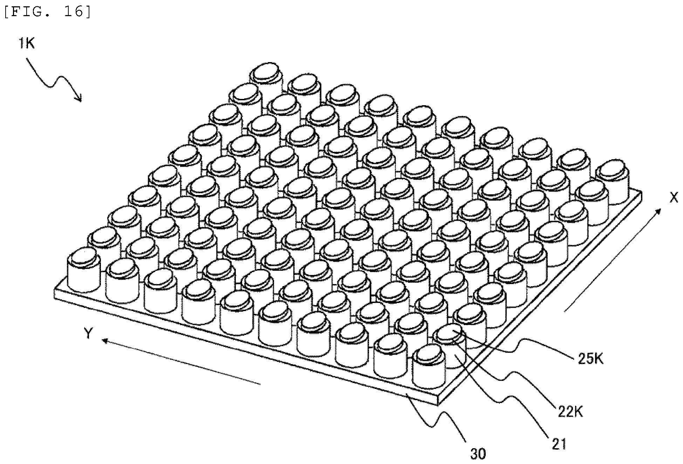

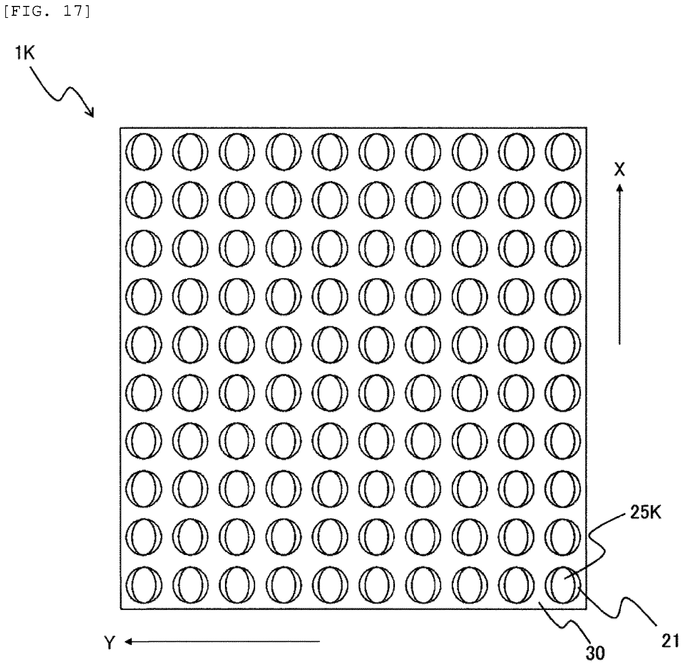

A conveyance device, and a specimen analysis system and a specimen pretreatment device including the same according to a fifth embodiment of the present invention will be described with reference to Figs. 14 to 21. Figs. 14 and 16 are views illustrating a schematic configuration of the conveyance device of the embodiment, and Figs. 15 and 17 are top views of the conveyance device of Figs. 14 and 16, respectively.

When the body to be conveyed is conveyed by the conveyance device, depending on the device, the body to be conveyed is mainly conveyed in one direction (for example, the X direction in Fig. 14 or the like), and only in the case of occurrence of a situation in which a conveyance destination is clogged or the like, the body to be conveyed moves in a lateral direction toward an adjacent lane (for example, the Y direction in Fig. 14 or the like).

As described above, when a main movement direction of the body to be conveyed is one direction and the body to be conveyed is required to move in the lateral direction depending on the situation, as shown in a conveyance device 1J illustrated in Figs. 14 and 15, a length of a shape of a magnet facing surface 25J of teeth 22J of the surface on the side facing the permanent magnet 10 is changed in the conveyance direction of the specimen rack 111 and the direction perpendicular to the conveyance direction thereof, such that it is possible to lengthen the length thereof in only one direction and to shorten the length thereof in the direction perpendicular to one direction. As a result, the thrust in the main movement direction can increase, and the movement stability in the main movement direction can increase.

The shape of the magnet facing surface is not limited to a rhombus such as the magnet facing surface 25J illustrated in Fig. 14 or the like, and as illustrated in Figs. 16 and 17, in a conveyance device 1K, a magnet facing surface 25K of teeth 22K can be formed in an elliptical shape.

As described in the third embodiment, among the surfaces of the teeth 22 facing the specimen rack 111, with respect to the length in the conveyance direction of the specimen rack 111 or in the direction perpendicular to the conveyance direction thereof, it is also possible to change the length in the direction inclined by 45 degrees in the conveyance direction, and the same effect can be obtained in this case as well.

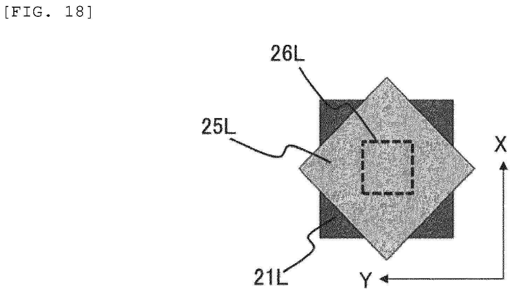

The shape of the magnet facing surface facing the permanent magnet and the shape of the winding are not particularly limited. Figs. 18 to 21 illustrate examples of the shape of the magnet facing surface facing the permanent magnet 10 and the shape of the winding.

Fig. 18 illustrates an example in which a cross section 26L of the winding portion of the teeth and a magnet facing surface 25L are formed in a rectangular shape, and a winding 21L having a rectangular inner shape therearound is combined therewith.

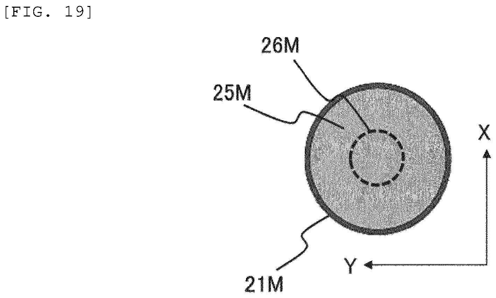

Fig. 19 illustrates an example in which a cross section 26M of the winding portion of the teeth inside a magnet facing surface 25M and a winding 21M is formed in a circular shape, and the winding 21M having a circular inner shape therearound is combined therewith.

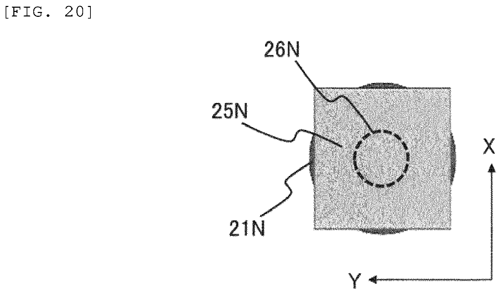

Fig. 20 illustrates an example in which a cross section 26N of the winding portion of the teeth inside a winding 21N is formed in a circular shape, the winding 21N having a circular inner shape therearound is combined therewith, and a shape of a magnet facing surface 25N of the teeth is formed to be larger than an outer diameter of the winding 21N and formed in a rectangular shape.

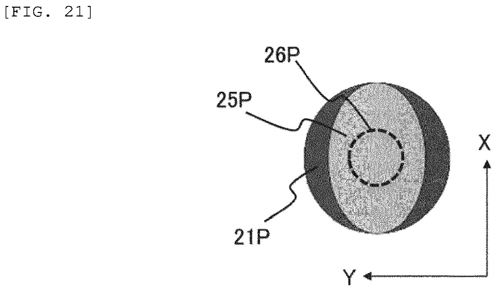

Fig. 21 illustrates a shape capable of increasing the thrust in the main movement direction as compared with those of Figs. 16 and 17, and increasing the thrust in the direction oblique to the conveyance direction as compared with those of Figs. 14 and 15, and illustrates an example of a shape in which a winding 21P and a cross section 26P have the same shapes as those of Fig. 16 or the like, but a magnet facing surface 25P of the teeth has a larger diameter than those of Fig. 16 or the like.

The magnet facing surface is not necessarily required to be formed in the rectangular shape as illustrated in Fig. 18 or the like, and can be formed in a polygonal shape. When the polygonal shape including the rectangular shape is formed, each corner can be C-chamfered or R-chamfered.

Since other configurations and operations are substantially the same as those of the conveyance device of the first embodiment described above, details thereof will be omitted.

The conveyance device of the fifth embodiment of the present invention also obtains almost the same effect as that of the conveyance device of the first embodiment described above.

Here, the embodiment considers a case in which a plurality of bodies to be conveyed are conveyed at the same time, and the bodies to be conveyed are present at locations adjacent to each other in the Y direction of the winding through which the current flows at that moment.

In this case, with respect to the location of the body to be conveyed, thrust that draws the body to be conveyed in the X direction is generated by allowing a current to flow through the winding ahead in the X direction, and thrust that draws the bodies to be conveyed, which are adjacent to each other in the Y direction, in the Y direction is also generated, such that an unexpected body to be conveyed invades from a lane adjacent to the main conveyance direction, and interference occurs in conveyance lane.

On the other hand, among the surfaces of the teeth 22 facing the specimen rack 111 as shown in the embodiment, the length in the conveyance direction of the specimen rack 111 and the length in the direction perpendicular to the conveyance direction thereof are different from each other, and among the surfaces of the teeth 22 facing the specimen rack 111, the length in the conveyance direction of the specimen rack 111 or in the direction perpendicular to the conveyance direction thereof is different from the length in the direction inclined by 45 degrees in the conveyance direction thereof, such that the large thrust is generated in the main conveyance direction (for example, the X direction), and the thrust generated in an adjacent direction (for example, the Y direction) can be smaller than that in the main conveyance direction. As a result, the thrust in the direction different from the main conveyance direction can be reduced, thereby making it possible to achieve further improvement of the running stability and further improvement of the conveyance capability.

<Sixth embodiment>

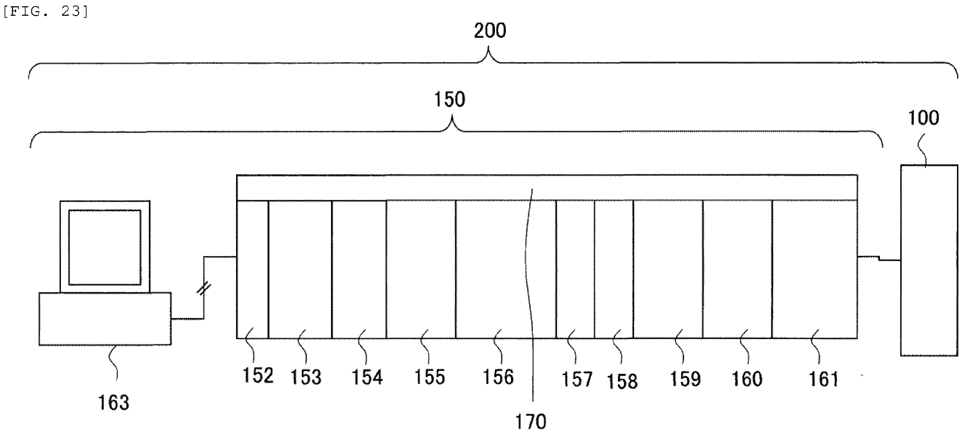

Embodiments of a specimen analysis system and a specimen pretreatment device to which the conveyance device according to the first to fifth embodiments of the present invention is desirably applied will be described with reference to Figs. 22 and 23. First, an overall configuration of a specimen analysis system 100 will be described with reference to Fig. 22. Fig. 22 is a diagram schematically illustrating the overall configuration of the specimen analysis system 100.

In Fig. 22, the specimen analysis system 100 is a device that respectively dispenses a specimen and a reagent into a reaction container, reacts the dispensed specimen and reagent, and measures the reacted liquid, and includes a carry-in unit 101, an emergency rack inlet 113, a conveyance line 102, a buffer 104, an analysis unit 105, a storage unit 103, a display unit 118, a control unit 120, or the like.

The carry-in unit 101 is a place where the specimen rack 111, in which a plurality of specimen containers 122 for storing biological specimens such as blood, urine, or the like are stored, is installed. The emergency rack inlet 113 is a place for inputting a specimen rack (calibration rack) on which a standard liquid is loaded and the specimen rack 111, in which the specimen container 122 for storing the specimen required for urgent analysis is stored, into the device.

The buffer 104 stores a plurality of specimen racks 111 conveyed by the conveyance line 102 so that dispensing order of the specimens in the specimen rack 111 can be changed.

The analysis unit 105 analyzes the specimen conveyed from the buffer 104 via a conveyor line 106. Details thereof will be described later.

The storage unit 103 stores the specimen rack 111 in which the specimen container 122 for storing the specimen whose analysis is completed by the analysis unit 105 is stored.

The conveyance line 102 is a line for conveying the specimen rack 111 installed in the carry-in unit 101, and has the same configuration as that of any one of the conveyance devices described in the first to fifth embodiments. In the sixth embodiment, the magnetic body, desirably the permanent magnet, is provided on a back surface side of the specimen rack 111.

The analysis unit 105 includes the conveyor line 106, a reaction disk 108, a specimen dispensing nozzle 107, a reagent disk 110, a reagent dispensing nozzle 109, a cleaning mechanism 112, a reagent tray 114, a reagent ID reader 115, a reagent loader 116, and a spectrophotometer 121.

The conveyor line 106 is a line for carrying the specimen rack 111 in the buffer 104 into the analysis unit 105, and has the same configuration as that of the conveyance device described in the first and fifth embodiments.

The reaction disk 108 includes a plurality of reaction containers. The specimen dispensing nozzle 107 dispenses the specimen from the specimen container 122 to the reaction container of the reaction disk 108 by rotational drive or vertical drive. A plurality of reagents are provided on the reagent disk 110. The reagent dispensing nozzle 109 dispenses the reagent from a reagent bottle in the reagent disk 110 into the reaction container of the reaction disk 108. The cleaning mechanism 112 cleans the reaction container of the reaction disk 108. The spectrophotometer 121 measures absorbance of a reaction liquid by measuring transmitted light obtained from a light source (not illustrated) through the reaction liquid of the reaction container.

The reagent tray 114 is a member for installing the reagent when the reagent is registered in the specimen analysis system 100. The reagent ID reader 115 is a device for acquiring reagent information by reading a reagent ID attached to the reagent installed in the reagent tray 114. The reagent loader 116 is a device that carries the reagent into the reagent disk 110.

The display unit 118 is a display device for displaying an analysis result of concentration of a predetermined component in a liquid specimen such as blood, urine, or the like.

The control unit 120 is formed of a computer or the like, controls an operation of each mechanism in the specimen analysis system 100, and performs calculation processing for obtaining the concentration of the predetermined component in the specimen such as blood, urine, or the like.

Hereinabove, the overall configuration of the specimen analysis system 100 is described.

Specimen analysis processing by the specimen analysis system 100 as described above is generally performed in the following order.

First, the specimen rack 111 is installed in the carry-in unit 101 or the emergency rack inlet 113, and is carried into the buffer 104 that can be randomly accessed by the conveyance line 102.

The specimen analysis system 100 carries the specimen rack 111 having the highest priority order among the racks stored in the buffer 104 into the analysis unit 105 by the conveyor line 106 according to a rule of the priority order.

The specimen rack 111 arriving at the analysis unit 105 is further conveyed by the conveyor line 106 up to a specimen fractionation location near the reaction disk 108. The specimen is fractionated in the reaction container of the reaction disk 108 by the specimen dispensing nozzle 107. The specimen dispensing nozzle 107 performs the fractionation of the specimen as many times as necessary according to an analysis item requested for the specimen.

The specimen dispensing nozzle 107 performs the fractionation of the specimen with respect to all the specimen containers 122 mounted on the specimen rack 111. The specimen rack 111 whose fractionation processing with respect to all the specimen containers 122 is completed is conveyed to the buffer 104 again. The specimen rack 111 whose all specimen fractionation processing including automatic re-examination is completed is conveyed to the storage unit 103 by the conveyor line 106 and the conveyance line 102.

The reagent to be used for the analysis is fractionated from the reagent bottle on the reagent disk 110 with respect to the reaction container in which the specimen is previously fractionated by the reagent dispensing nozzle 109. Next, a stirring mechanism (not illustrated) is used to stir a mixed liquid of the specimen and the reagent in the reaction container.

Next, the light generated from the light source is transmitted through the reaction container containing the mixed liquid after stirring, and luminosity of the transmitted light is measured by the spectrophotometer 121. The luminosity measured by the spectrophotometer 121 is transmitted to the control unit 120 via an A/D converter and an interface.

Next, the control unit 120 performs the calculation to obtain the concentration of the predetermined component in the liquid specimen such as blood, urine, or the like, and a result of the concentration is displayed on the display unit 118 or the like, or stored in a storage unit (not illustrated).

As illustrated in Fig. 22, the specimen analysis system 100 is not required to include all the above-described configurations, and a unit for pretreatment can be appropriately added, or some units or some configurations can be deleted. The analysis unit 105 is not limited to biochemical analysis, and may be used for immunoassay. The analysis unit 105 is not required to be one and two or more of the analysis unit 105 may be provided. In this case as well, the analysis unit 105 and the carry-in unit 101 are connected to each other by the conveyance line 102, and the specimen rack 111 is conveyed from the carry-in unit 101.

Next, an overall configuration of a specimen pretreatment device 150 will be described with reference to Fig. 23. Fig. 23 is a view schematically illustrating the overall configuration of the specimen pretreatment device 150.

In Fig. 23, the specimen pretreatment device 150 is a device that executes various pretreatments necessary for the specimen analysis. From the left side to the right side in Fig. 23, the specimen pretreatment device 150 includes: a plurality of units including, as basic elements, a capping unit 152, a specimen storage unit 153, an empty holder stacker 154, a specimen input unit 155, a centrifuge unit 156, a liquid quantity measuring unit 157, an opening unit 158, a child specimen container preparation unit 159, a dispensing unit 165, and a transfer unit 161; a conveyance device 170; and a control unit PC163 that controls operations of the plurality of units.

As a conveyance destination of the specimen processed by the specimen pretreatment device 150, the specimen analysis system 100 for performing qualitative and quantitative analysis of the component of the specimen is connected.

The specimen input unit 155 is a unit for inputting the specimen container 122 storing the specimen into the specimen pretreatment device 150. The centrifuge unit 156 is a unit for centrifuging the inputted specimen container 122. The liquid quantity measuring unit 157 is a unit for measuring a liquid quantity of the specimen stored in the specimen container 122. The opening unit 158 is a unit for opening a stopper of the inputted specimen container 122. The child specimen container preparation unit 159 is a unit that performs a necessary preparation for dispensing the specimen stored in the inputted specimen container 122 into the next dispensing unit 165. The dispensing unit 165 is a unit for performing subdivision of the centrifuged specimen for analyzing the centrifuged specimen by the specimen analysis system or the like, and for attaching a barcode or the like to the subdivided specimen container 122 and child specimen container 122. The transfer unit 161 is a unit for classifying the dispensed child specimen container 122, and for performing preparation for transfer to the specimen analysis system. The capping unit 152 is a unit for closing the stopper on the specimen container 122 and the child specimen container 122. The specimen storage unit 153 is a unit for storing the closed specimen container 122.

The conveyance device 170 is a mechanism for conveying the specimen holder and the specimen rack that store the specimen container 122 between the respective units and between the specimen pretreatment device 150 and the specimen analysis system 100, and uses any one of the conveyance devices according to the first and fifth embodiments.

The specimen pretreatment device 150 is not required to include all the above-described configurations, and a unit can be further added, or some units or some configurations can be deleted.

The specimen analysis system of the embodiment may be the specimen analysis system 200 including the specimen pretreatment device 150 and the specimen analysis system 100 as illustrated in Fig. 23. In this case, the specimen container 122 can be conveyed not only within the respective systems but also between the systems by connection with the conveyance device 1 or the like of the first to fifth embodiments.

The specimen analysis systems 100 and 200 and the specimen pretreatment device 150 of the sixth embodiment of the present invention include the conveyance device 1 or the like of the first to fifth embodiments, such that the specimen container 122 can be conveyed to the conveyance destination with high efficiency, and the time until the analysis result can be obtained can be shortened. Conveyance troubles can be reduced, and a burden on an inspection technician can be reduced.

The sixth embodiment illustrates a case in which the specimen rack 111 that stores five specimen containers 122 where the specimen is stored is conveyed as a conveyance target. In addition to the specimen rack 111 that stores five specimen containers 122, a specimen holder that holds one specimen container 122 can be conveyed as the conveyance target.

<Others>

The present invention is not limited to the embodiments, and includes various modifications. The embodiments are described in detail in order to describe the present invention in an easy-to-understand manner, and are not necessarily limited to those including all the described configurations.

It is also possible to replace a part of the configuration of one embodiment with a configuration of another embodiment, and it is also possible to add the configuration of another embodiment to the configuration of one embodiment. Another configuration can also be added, deleted, and replaced, with respect to a part of the configuration of each embodiment.

For example, while the first to fifth embodiments describe a case in which a body to be conveyed is a specimen rack, the body to be conveyed is not limited to the specimen rack or the like, and various objects that are required to be conveyed on a large scale can be a conveyance target.

Reference Signs List

1, 1G, 1H, 1I, 1J, 1K: Conveyance device
10: Permanent magnet (first magnetic body)
21, 21a, 21b, 21D, 21E, 21F, 21L, 21M, 21N, 21P: Winding
22, 22a, 22b, 22A, 22B, 22C, 22D, 22E, 22F, 22G, 22H, 22J, 22K: Teeth (second magnetic body)
25, 25A, 25B, 25C, 25D, 25E, 25F, 25G, 25H, 25J, 25K, 25L, 25M, 25N, 25P: Teeth magnet facing surface
26, 26L, 26M, 26N: Cross section of winding portion of teeth
30: Yoke
50: Drive circuit
55: Current command calculation unit
60: Location detection unit
70a, 70b: Thrust characteristics
100: Specimen analysis system
101: Carry-in unit
102: Conveyance line
103: Storage unit
104: Buffer
105: Analysis unit
106: Conveyor line
107: Specimen dispensing nozzle
108: Reaction disk
109: Reagent dispensing nozzle
110: Reagent disk
111: Specimen rack
112: Cleaning mechanism
113: Emergency rack inlet
114: Reagent tray
115: Reader
116: Reagent loader
118: Display unit
120: Control unit
121: Spectrophotometer
122: Specimen container
122: Child specimen container
150: Specimen pretreatment device
152: Capping unit
153: Specimen storage unit
154: Holder stacker
155: Specimen input unit
156: Centrifuge unit
157: Liquid quantity measuring unit
158: Opening unit
159: Child specimen container preparation unit
161: Transfer unit
165: Dispensing unit
170: Conveyance device
200: Specimen analysis system

**Claims**

1. A conveyance device, comprising:

   a first magnetic body provided on a side of a body to be conveyed;
   teeth formed of a second magnetic body; and
   a winding wound around a side of an outer periphery of the teeth, wherein
   a cross-sectional area of a cross section of a part of the teeth facing the first magnetic body is larger than that of other parts thereof.

2. The conveyance device according to claim 1, wherein
   among the teeth, the cross-sectional area of the part of the teeth facing the first magnetic body is larger than a cross-sectional area of a part thereof around which the winding is wound.

3. The conveyance device according to claim 2, wherein
   a gap Lc between the first magnetic body and the winding and a gap Lt between the first magnetic body and the teeth satisfy a relationship of Lc>Lt.

4. A conveyance device, comprising:

   a first magnetic body provided on a side of a body to be conveyed;
   teeth formed of a second magnetic body; and
   a winding wound around an outer periphery of the teeth, wherein
   a gap Lc between the first magnetic body and the winding and a gap Lt between the first magnetic body and the teeth satisfy a relationship of Lc>Lt.

5. The conveyance device according to claim 1, wherein
   the cross-sectional area of the cross section of the part of the teeth facing the first magnetic body is larger than that of other parts thereof.

6. The conveyance device according to claim 1 or 4, wherein
   among the teeth, a shape of a surface of the teeth facing the body to be conveyed is circular or elliptical.

7. The conveyance device according to claim 1 or 4, wherein
   among the teeth, a shape of a surface of the teeth facing the body to be conveyed is polygonal.

8. The conveyance device according to claim 7, wherein
   among the teeth, the shape of the surface of the teeth facing the body to be conveyed is rectangular.

9. The conveyance device according to claim 8, wherein
   among the teeth, a corner part of the surface of the teeth facing the body to be conveyed faces a conveyance direction of the body to be conveyed and a direction perpendicular to the conveyance direction thereof.

10. The conveyance device according to claim 8, wherein
   among the teeth, a corner part of the surface of the teeth facing the body to be conveyed faces a direction inclined by 45 degrees in a conveyance direction of the body to be conveyed.

11. The conveyance device according to claim 1 or 4, wherein
   among the teeth, a surface of the teeth facing the body to be conveyed becomes thinner continuously or stepwise as approaching the side of the body to be conveyed.

12. The conveyance device according to claim 1 or 4, wherein
   among surfaces of the teeth facing the body to be conveyed, a length is different between a conveyance direction of the body to be conveyed and a direction perpendicular to the conveyance direction thereof.

13. The conveyance device according to claim 1 or 4, wherein
   among surfaces of the teeth facing the body to be conveyed, a length in a direction inclined by 45 degrees in a conveyance direction of the body to be conveyed is different from a length in the conveyance direction thereof or in a direction perpendicular to the conveyance direction thereof.

14. The conveyance device according to claim 1 or 4, wherein
a width of the largest part of the teeth is 0.5 Pt or less with respect to a pitch Pt of the teeth.

15. A specimen analysis system, comprising:
the conveyance device according to claim 1 or 4.

16. A specimen pretreatment device, comprising:
the conveyance device according to claim 1 or 4.

[FIG. 1]

[FIG. 2]

[FIG. 3]

[FIG. 4]

18

[FIG. 5]

[FIG. 6]

[FIG. 7]

[FIG. 8]

25E

21E    22E

[FIG. 9]

MAGNET POSITION

[FIG. 10]

[FIG. 11]

[FIG. 12]

1H

X

Y

25H

10    22H    21    30

[FIG. 13]

[FIG. 14]

[FIG. 15]

[FIG. 16]

[FIG. 17]

[FIG. 18]

[FIG. 19]

[FIG. 20]

[FIG. 21]

[FIG. 22]

[FIG. 23]

<table>
<tr><td colspan="2" align="center">**INTERNATIONAL SEARCH REPORT**</td><td colspan="2">International application No.<br><br>PCT/JP2020/000905</td></tr>
</table>

**A. CLASSIFICATION OF SUBJECT MATTER**
Int.Cl. H02K41/02(2006.01)i, B65G54/02(2006.01)i, G01N35/04(2006.01)i,
H02K41/03(2006.01)i
FI: H02K41/02, G01N35/04G, G01N35/04H, H02K41/03A, B65G54/02
According to International Patent Classification (IPC) or to both national classification and IPC

**B. FIELDS SEARCHED**

Minimum documentation searched (classification system followed by classification symbols)
Int.Cl. H02K41/02, B65G54/02, G01N35/04, H02K41/03

Documentation searched other than minimum documentation to the extent that such documents are included in the fields searched
    Published examined utility model applications of Japan     1922-1996
    Published unexamined utility model applications of Japan   1971-2020
    Registered utility model specifications of Japan        1996-2020
    Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2011-199936 A (HITACHI, LTD.) 06.10.2011 (2011-10-06), paragraphs [0002]-[0032], fig. 1-5 | 1-5, 14<br>6-8, 11, 15-16<br>9-10, 12-13 |
| Y | JP 2010-142000 A (SUMITOMO ELECTRIC INDUSTRIES, LTD.) 24.06.2010 (2010-06-24), paragraphs [0019]-[0026], fig. 1-4 | 6 |
| Y | JP 59-28985 Y2 (MITSUBISHI ELECTRIC CORPORATION) 21.08.1984 (1984-08-21), fig. 1-4 | 7-8 |
| Y | JP 2013-9542 A (HITACHI APPLIANCES INC.) 10.01.2013 (2013-01-10), fig. 3, 4 | 11 |
| Y | JP 2017-527804 A (F. HOFFMANN-LA ROCHE AG) 21.09.2017 (2017-09-21), paragraph [0006], fig. 1 | 15-16 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>   30.01.2020 | Date of mailing of the international search report<br>   10.02.2020 |
|---|---|
| Name and mailing address of the ISA/<br>   Japan Patent Office<br>   3-4-3, Kasumigaseki, Chiyoda-ku,<br>   Tokyo 100-8915, Japan | Authorized officer<br><br><br>Telephone No. |

Form PCT/ISA/210 (second sheet) (January 2015)

INTERNATIONAL SEARCH REPORT

Information on patent family members

International application No.

PCT/JP2020/000905

```
JP 2011-199936 A   06.10.2011   (Family: none)

JP 2010-142000 A   24.06.2010   (Family: none)

JP 59-28985 Y2     21.08.1984   (Family: none)

JP 2013-9542 A     10.01.2013   (Family: none)

JP 2017-527804 A   21.09.2017   US 2017/0174448 A1
                                paragraph [0006], fig. 1
                                WO 2016/038014 A1
                                EP 2995580 A1
                                CN 106604880 A
```

Form PCT/ISA/210 (patent family annex) (January 2015)

**EP 3 937 359 A1**

## REFERENCES CITED IN THE DESCRIPTION

### Patent documents cited in the description

- JP 2017077971 A
- JP 2017102103 A